(19) Europäisches Patentamt
European Patent Office
Office européen des brevets

(11) Numéro de publication: **0 191 690 B1**

(12) **FASCICULE DE BREVET EUROPEEN**

(45) Date de publication du fascicule du brevet: **03.05.89**

(51) Int. Cl.⁴: **C 08 L 23/16**, C 08 L 27/08, B 32 B 27/04, C 08 L 73/00

(21) Numéro de dépôt: **86400208.4**

(22) Date de dépôt: **31.01.86**

(54) **Composite polyfluorure de vinylidène-copolymère(éthylène-oxyde de carbone), traitement du polyfluorure de vinylidène par ce copolymère en vue de son adhésion à un substrat.**

(30) Priorité: **08.02.85 FR 8501763**

(43) Date de publication de la demande: **20.08.86 Bulletin 86/34**

(45) Mention de la délivrance du brevet: **03.05.89 Bulletin 89/18**

(84) Etats contractants désignés: **BE CH DE FR GB IT LI LU NL SE**

(56) Documents cités:
**EP-A- 0 137 332**
**FR-A- 2 457 180**

**RESEARCH DISCLOSURE, vol. 149, septembre 1976, page 75, no. 14948, Industrial Opportunities Ltd., Homewell, Havant, Hampshire, GB; "Polyolefin coextrudable adhesive resins"**
**JAPANESE PATENTS GAZETTE, vol. E, no. 46, 5 janvier 1983, page 17, no. 98904, Londres, GB; & JP - A - 57 165 427 (TOYO SODA MFG) 12-10-1982**

(73) Titulaire: **ATOCHEM, 4 & 8, Cours Michelet La Défense 10, F-92800 Puteaux (FR)**

(72) Inventeur: **Strassel, Albert, 30, rue Pasteur, F-69600 Oullins (FR)**
Inventeur: **Rocher, Philippe, 933, route de Givors, F-69390 Vernaison (FR)**

(74) Mandataire: **Foiret, Claude et al, ATOCHEM Département Propriété Industrielle, F-92091 Paris la Défense 10 Cédex 42 (FR)**

EP 0 191 690 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un composite polyfluorure de vinylidène (PVDF)-copolymère(éthylène-oxyde de carbone) (ECO). Ce composite constitué d'un matériau de PVDF revêtu, partiellement ou en totalité, d'ECO est surtout utilisé comme intermédiaire pour la fabrication de matériaux revêtus d'une couche de PVDF de protection, l'ECO servant d'intermédiaire de collage. L'invention concerne donc également le traitement du PVDF par l'ECO en vue de faire adhérer le PVDF à un substrat.

Le PVDF est connu pour être un matériau difficile à faire adhérer à un substrat. Aussi de nombreuses solutions ont-elles été proposées, dont l'une des plus efficaces est d'interposer entre le substrat et le PVDF au moins un poymère compatible avec le PVDF. Les polymères compatibles connus sont ceux possédant dans leurs molécules des groupements carbonyles ramifiés sur la chaîne. C'est ainsi que dans les FR 2 457 180, 1 484 153 et 2 545 040 sont respectivement utilisés le polyméthacrylate de méthyle, les copolymères éthylène-acétate de vinyle, les copolymères éthylène-acétate de vinyle additionnés d'un polymère d'acétate de vinyle. Il est également connu du brevet des Etats Unis d'Amérique 3 541 039 de plastifier le PVDF avec les polyesters, ce qui laisse supposer un minimum d'interactions entre le PVDF et les groupements esters. Toutefois, bien que des polyuréthannes aient été essayés comme moyen de collage, les résultats restent souvent insuffisants.

Selon l'invention il a été constaté que les ECO possédant dans leur molécule une structure caractérisée par une alternance d'un ou plusieurs motifs éthyléniques et d'un groupement carbonyle

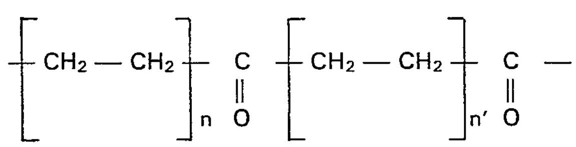

n et n' identiques ou différents étant au moins égaux à 1 s'allient d'une façon inattendue au PVDF. Il est même constaté qu'un tel copolymère possède de meilleures propriétés adhésives que les copolymères connus éthylène-acétate de vinyle.

Les ECO particulièrement recommandés contiennent environ 3 à 32 pour cent en poids d'oxyde de carbone par rapport au poids total de l'éthylène et de l'oxyde de carbone et de préférence de 15 à 30.

De tels copolymères sont connus en eux-mêmes. Leur procédé de fabrication est décrit dans le FR 2 149 933 pour une utilisation en mélange comme plastifiant solide du chlorure de polyvinyle. De façon générale ils sont obtenus par mise en contact dans un réacteur, en présence d'un catalyseur de polymérisation par radicaux libres utilisé pour la polymérisation de l'éthylène, d'éthylène et d'oxyde de carbone, la réaction s'effectuant sous pression à une température inférieure à 300°C.

Il est important, selon l'invention que le copolymère possède dans sa molécule une alternance d'un ou plusieurs motifs éthyléniques et de groupement carbonyle, ce qui n'exclut donc pas les copolymères d'éthylène, d'oxyde de carbone et d'un tiers monomère. En conséquence sont également compris comme ECO les terpolymères contenant une alternance d'au moins un motif éthylènique et de groupement carbonyle. Il est préférable, pour que l'adhérence au PVDF du terpolymère reste convenable, que le ou les termonomères liés à l'éthylène et à l'oxyde de carbone, soient choisis parmi les monomères conduisant à un polymère réputé compatible ou possédant des affinités avec le PVDF, c'est-à-dire qu'il existe une interaction moléculaire suffisante aux surfaces de contact du PVDF avec le terpolymère pour qu'il y ait à l'interface formation d'un mélange homogène présentant une bonne résistance physique. Parmi les termonomères préférés on peut citer: les acides monocarboxyliques ou dicarboxyliques insaturés contenant de 3 à 20 atomes de carbone, les esters de ces acides, les esters vinyliques d'acides carboxyliques saturés dans lesquels le groupe acide contient de 1 à 18 atomes de carbone, les oxydes de vinyle et d'alcoyle dans lesquels le groupe alcoyle contient de 1 à 18 atomes de carbone, l'acrylonitrile, le méthacrylonitrile. Les terpolymères préférés pouvant être considérés comme ECO, résultent de la copolymérisation en pour cent poids de 40 à 80 d'éthylène, 3 à 30 d'oxyde de carbone et 5 à 57 d'un ou plusieurs termonomères copolymérisables avec ceux-ci. De tels terpolymères sont connus en eux-mêmes. Leur procédé de fabrication est décrit dans le FR 2 149 932 pour une utilisation en mélange comme plastifiant solide du chlorure de polyvinyle. De façon générale ils sont obtenus par mise en contact dans un réacteur, en présence d'un catalyseur de polymérisation par radicaux libres utilisé pour la polymérisation de l'éthylène, d'éthylène, d'oxyde de carbone et de termonomère(s), la réaction s'effectuant sous pression à une température inférieure à 300°C.

Dans la mesure où il ne peut nuire de façon sensible à la liaison PVDF-ECO ou terpolymère défini comme ECO, il est possible d'associer par mélange à ces deux derniers un tiers polymère. En particulier il est possible d'associer un tiers polymère choisi parmi les acrylates et méthacrylates d'alcoyles, leurs copolymères avec l'éthylène, les polymères et copolymères obtenus à partir d'acétate de vinyle tel que le polyacétate de vinyle ou les copolymères d'éthylène et d'acétate de vinyle, les polyesters. De tels mélanges contiennent de préférence plus de 50 pour cent en poids d'ECO. On peut bien entendu incorporer, éventuellement à l'ECO ou aux mélanges les additifs habituels tels que des agents tachifiants, des charges, des plastifiants, des pigments, des stabilisants et autres.

Le PVDF du composite comprend non seulement l'homopolymère mais encore les copolymères de PVDF ou les mélanges de PVDF, contenant au moins 50 pour cent en poids de PVDF, avec un autre polymère, de préférence possédant des affinités avec ledit PVDF.

Le composite selon l'invention peut être obtenu par tout moyen connu tel qu'enduction de l'ECO sur le PVDF, pressage à chaud ou coextrusion des deux matériaux.

Une dissolution ou suspension de l'ECO dans un

solvant peut être appliquée sur la surface du PVDF, l'enemble étant ensuite porté à une température comprise entre environ 100 et 160°C et mieux entre 140 et 160°C pendant le temps suffisant pour évaporer le solvant. Comme solvant on choisit de préférence un solvant polaire aprotique comme le tétrahydrofurane, diméthylacétamide, diméthylformamide.

On peut encore presser à chaud, environ 100 à 180°C, un film d'ECO sur la surface de PVDF à revêtir. La pression et la température exacte sont facilement connues de l'homme de métier selon l'ECO choisi.

Le composite peut encore être obtenu par le procédé de coextrusion des thermoplastiques tel qu'il est décrit dans POLYMER PLASTICS TECHNOLOGY AND ENGINEERING (1974) vol. 3 pages 49 à 68 «Coextruded films-Process and Properties» par Hohn E. GUILLOTE. Ce procédé est préféré aux précédents parce qu'à compositions égales il conduit au niveau d'adhésion le plus élevé.

Le composite selon l'invention peut être utilisé pour revêtir de PVDF un substrat non compatible avec le PVDF. On connaît les qualités du PVDF: inertie chimique et aux rayonnements UV, imperméabilité aux liquides et aux gaz, tenue à long terme aux conditions météorologiques etc. Aussi est-il toujours recherché des moyens, du fait des problèmes d'adhésion, de protéger par le PVDF les substrats ne possédant pas ces qualités. Ces protections peuvent aller d'une simple couche de PVDF de quelques micromètres à, comme dans le cas de l'anticorrosion, à plusieurs millimètres. Grâce à la couche d'ECO du composite il est possible par exemple de revêtir à chaud directement de PVDF un substrat compatible avec l'ECO. On peut également utiliser une colle intermédiaire, compatible avec l'ECO. Il est encore possible de fabriquer directement un matériau composite par coextrusion de polyfluorure de vinylidène et de polymère thermoplastique non compatible avec le PVDF caractérisé en ce que l'on coextrude en intermédiaire servant de liant de l'ECO. Selon cette dernière technique il est possible par exemple de fabriquer directement un composite de PVDF et de: polycarbonate, polyéthylène, polypropylène, polystyrène, acrylonitrile-butadiène-styrène (ABS), élastomères, polychlorure de vinyle. Selon les différents modes de collage il est possible de fabriquer à partir du composite PVDF-ECO un composite de PVDF et de: verre, métal, bois, textile et autres.

Les exemples suivants servent à illustrer l'invention sans toutefois la limiter.

*Exemple 1*

On prend d'une part un terpolymère(I)éthylène-oxyde de carbone-acétate de vinyle de composition en pour cent poids: motifs éthyléniques = 68, groupements carbonyles = 12, motif acétates de vinyle = 20, et d'autres part, à titre comparatif, un copolymère (II)éthylène-acétate de vinyle à 20 pour cent en poids de motifs acétate de vinyle.

Entre deux plaques en inox on préchauffe, séparément, (I) et (II) pendant 5 min. à 180°C. On applique ensuite une pression de 2 bars pendant 1 min. On plonge les plaques en inox dans l'eau froide. On a réalisé deux films (I) et (II) de 100 µm à 20 pour cent en poids d'acétate de vinyle.

Entre les plateaux d'une presse chauffée à 180°C sous 2 bars pendant 1 min. on prépare les deux composites (I) et (II) en mettant en contact respectivement les deux films précédents avec un film de PVDF (Foraflon® 1000 HD) d'une épaisseur de 80 µm. La pression relachée on refroidit dans l'eau les deux échantillons.

Après 48 heures, on découpe dans les deux composites des bandes de 25 mm × 180 mm et on effectue un essai de pelage à 250 mm/min selon la norme ASTM D 1876 dont on exprime le résultat en g/cm

| Nature du copolymère | Adhésion en g/cm |
|---|---|
| I | 1880 |
| II | 80 |

Cet exemple illustre l'influence des groupes carbonyles.

*Exemple 2*

On reprend le terpolymère (I) de l'exemple 1 et dans les conditions de cet exemple on prépare un composite avec le PVDF. On le compare aux échantillons préparés à partir des trois mélanges suivants:

mélange de (I) avec le copolymère éthylène-acétate de vinilydène (EVA) à 20 pour cent de l'exemple 1 dans les proportions en poids respectives de:

70/30 - 50/50 - 30/70

Les mélanges sont effectués sur un mélangeur à cylindre à 140°C.

Les résultats d'adhésion sont les suivants:

| I/EVA | Adhésion sur PVDF en g/cm |
|---|---|
| 30/70 | 630 |
| 50/50 | 1235 |
| 70/30 | 1950 |

Cet exemple illustre l'importance de la présence du groupement carbonyle dans une chaîne polymérique pour obtenir une excellente adhésion.

*Exemple 3*

On reprend l'exemple 2 en remplaçant l'EVA par un copolymère éthylène-acétate d'éthyle (EEA) à 20 pour cent environ du reste de ce dernier monomère.

Les résultats obtenus sont les suivants:

| I/EEA | Adhésion sur PVDF en g/cm |
|---|---|
| 0/100 | ≃ 40 |
| 30/70 | 540 |
| 50/50 | 1400 |
| 70/30 | 1700 |

*Exemple 4*

On reprend l'exemple 1 en remplaçant le terpolymère (I) par un copolymère éthylène-oxyde de carbone contenant à l'analyse en poids environ 82 pour cent de $-CH_2-CH_2-$ et 18 pour cent de $-\underset{\underset{O}{\|}}{C}-$

Le résultat d'adhésion sur le PVDF (Foraflon 6000 HD) est de 1600 g/cm.

*Exemple 5*

On reprend l'exemple 1 en mélangeant à 50/50 en poids au terpolymère (I) un terpolymère (II) éthylène (65 pour cent poids) -acétate de vinyle (25 pour cent poids)-acide acrylique (10 pour cent poids). Le mélange est effectué sur une mélangeur à cylindre à 140°C.

A titre comparatif on prépare un échantillon à partir du terpolymère (II).

Les résultats obtenus sont les suivants:

| | Adhésion sur PVDF en g/cm |
|---|---|
| I + II | 1300 |
| II | 85 |

*Exemple 6*

On reprend l'exemple 1 en mélangeant à 50/50 en poids au terpolymère (I) un copolymère séquencé polyamide polyéther (PEBAX® 2533).

Le mélange est effectué sur un mélangeur à cylindre à 150°C.

Le résultat d'adhésion sur le PVDF est de 1120 g/cm. L'adhésion du même polyamide polyether seul sur les PVDF est de 130 g/cm.

*Example 7*

On reprend le terpolymère (I) se présentant sous forme de granulés thermoplastiques.

On dispose de trois extrudeuses:

la première, de marque ANDOUARD et de diamètre de vis de 40 mm, contient du polyéthylène (1005 $VN_2$)

la deuxième, de marque FAIREX et de diamètre de vis de 25 mm, contient le terpolymère (I)

la troisième, identique à la deuxième, contient le PVDF (Forafon 6000 HD).

Les trois extrudeuses alimentent un cylindre répartiteur de flux fixé à une filière plate destinée à la fabrication d'un film de 200 à 400 µm d'épaisseur; l'ensemble est suivi d'une calandre chauffée à 40°C.

Les températures de chauffe des extrudeuses s'étagent de 170 à 190°C, celle du répartiteur de flux étant de 180°C.

On règle les débits des extrudeuses de façon à obtenir un composite présentant successivement une épaisseur de PVDF d'environ 100 µm, de terpolymère (I) 80 µm et de polyéthylène 200 µm.

Le résultat d'adhésion du terpolymère (I) sur le PVDF est de 1950 g/cm au minimum.

*Exemple 8*

On reprend l'exemple 7 en remplaçant le terpolymère (I) par un mélange (III) de terpolymère (I) et de copolymère éthylène-acétate de vinyle (Orevac® 9512) dans les proportions respectives en poids de: ($III_a$) 30/70; ($III_b$) 50/50 et ($III_c$) 70/30.

Les mélanges sont effectués sur un mélangeur à cylindres à 140°C.

On obtient trois composites dont les résultats d'adhésion sont les suivants:

| III | Adhésion côté PVDF en g/cm | Adhésion côté polyéthylène |
|---|---|---|
| $III_a$ | 1120 | 1420 |
| $III_b$ | >2000 | 920 |
| $III_c$ | >2000 | 600 |

*Exemple 9*

On reprend l'exemple 7 en remplaçant le terpolymère (I) par un autre composé (IV) contenant des motifs éthyléniques et carbonyles (Elvaloy® 742).

On obtient un composite sur lequel le résultat d'adhésion est de 1600 g/cm.

*Exemple 10*

On prend le mélange ($III_b$) de l'exemple 8 que l'on coextrude, au moyen de deux extrudeuses FAIREX de diamètre de vis de 25 mm, avec un PVDF (Foraflon 4000 HD). Les températures d'extrusion sont de 180°-190°C.

On réalise un composite de PVDF de 150 µm d'épaisseur traité sur une face du mélange ($III_b$) de 100 µm.

Ce composite est utilisé en extrusion couchage à chaud sur aluminium, acier, ABS. On obtient ainsi des complexes revêtus de PVDF dont le niveau d'adhésion du substrat est dans tous les cas supérieur à 500 g/cm.

**Revendications**

1. Composite à base de polyfluorure de vinylidène caractérisé en ce qu'il est constitué d'un matériau de PVDF revêtu au moins partiellement d'un copolymère possédant dans sa molécule une alternance

d'au moins un motif éthylénique et d'un groupement carbonyle selon la chaîne

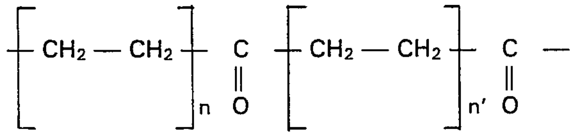

n et n' identiques ou différents étant au moins égaux à 1.

2. Composite selon la revendication 1, caractérisé en ce que le copolymère contient de 3 à 32 pour cent en poids d'oxyde de carbone par rapport au poids total de l'éthylène et de l'oxyde de carbone.

3. Composite selon l'une des revendications 1 à 2, caractérisé en ce que le copolymère est un terpolymère résultant de la copolymérisation d'éthylène, d'oxyde de carbone et d'au moins un tiers monomère.

4. Composite selon la revendication 3 caractérisé en ce que le copolymère résulte de la copolymérisation en pour cent poids de 40 à 80 d'éthylène, 3 à 30 d'oxyde de carbone et 5 à 57 d'au moins un termonomère.

5. Composite selon l'une des revendications 1 à 4, caractérisé en ce que le copolymère est mélangé à un tiers polymère ou copolymère.

6. Substrat revêtu de polyfluorure de vinylidène au moyen du composite des revendications 1 à 5.

7. Matériau composite selon la revendication 6, obtenu par coextrusion de polyfluorure de vinylidène et de polymère thermoplastique non compatible avec le polyfluorure de vinylidène caractérisée en ce que l'on coextrude en intermédiaire servant de liant un copolymère tel que défini dans les revendications 1 à 5.

**Patentansprüche**

1. Verbundstoff auf Basis von Polyvinylidenfluorid, dadurch gekennzeichnet, daß dieser aus einem Polyvinylidenfluoridmaterial besteht, das wenigstens teilsweise mit einem Copolymer beschichtet ist, das in seinem Molekül eine Aufeinanderfolge wenigstens einer ethylenischen Baueinheit und einer Carbonylgruppe aufweist gemäß der Kette

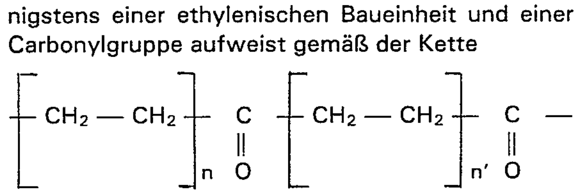

in der n und n' identisch oder verschieden und wenigstens gleich 1 sind.

2. Verbundstoff gemäß Anspruch 1, dadurch gekennzeichnet, daß das Copolymer 3 bis 32 Gewichtsprozent an Kohlenoxid enthält, bezogen auf das Gesamtgewicht an Ethylen und Kohlenoxid.

3. Verbundstoff nach einem der Ansprüche 1 bis 2, dadurch gekennzeichnet, daß das Copolymer ein Terpolymer ist erhältlich aus der Copolymerisation von Ethylen, Kohlenoxid und wenigstens eines dritten Monomeren.

4. Verbundstoff gemäß Anspruch 3, dadurch gekennzeichnet, daß das Copolymer erhältlich ist durch Copolymerisation von 40 bis 80 Gewichtsprozent Ethylen, 3 bis 30 Gewichtsprozent Kohlenoxid und 5 bis 57 Gewichtsprozent wenigstens eines Termonomeren.

5. Verbundstoff nach einem der Ansprüche 1 bis 4, dadurch gekennzeichnet, daß das Copolymer mit einem dritten Polymer oder Copolymer gemischt wird.

6. Substrat beschichtet mit Polyvinylidenfluorid mittels eines Verbundstoffs gemäß den Ansprüchen 1 bis 5.

7. Verbundmaterial gemäß Anspruch 6, erhältlich durch Coextrusion von Polyvinylidenfluorid und einem thermoplastischen Polymeren, das mit Polyvinylidenfluorid nicht kompatibel ist, dadurch gekennzeichnet, daß man als Zwischenprodukt, das als Bindemittel dient, ein Copolymer wie in den Ansprüchen 1 bis 5 definiert coextrudiert.

**Claims**

1. A composite based on vinylidene polyfluoride, characterized in that it is constituted by a PVDF material covered at least partially by a copolymer possessing in its molecule an alternation of at least one ethylenic sequence and a carbonyl group in a chain of formula

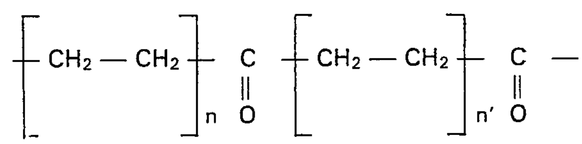

n and n' being identical or different and at least equal to 1.

2. A composite according to Claim 1, characterized in that the copolymer contains from 3 to 32 per cent by weight of carbon monoxide relative to the total weight of ethylene and carbon monoxide.

3. A composite according to one of Claims 1 to 2, characterized in that the copolymer is a terpolymer resulting form the copolymerization of ethylene, carbon monoxide, and at least a third monomer.

4. A composite according to Claim 3, characterized in that the copolymer results from the copolymerization of 40 to 80 per cent by weight ethylene, 3 to 30 per cent by weight carbon monoxide, and 5 to 57 per cent by weight of at least a third monomer.

5. A composite according to one of Claims 1 to 4, characterized in that the copolymer is mixed with a third polymer or copolymer.

6. A substrate covered with vinylidene polyfluoride by means of the composite of Claims 1 to 5.

7. A composite material according to Claim 6 obtained by coextrusion of vinylidene polyfluoride and thermoplastic polymer not compatible with vinylidene polyfluoride, characterized in that a copolymer as defined in Claims 1 to 5 is coextruded as an intermediate layer which acts as a binding layer.